**Europäisches Patentamt**

(19) **European Patent Office**

**Office européen des brevets**

(11) Numéro de publication: **0 100 266**
**B1**

## FASCICULE DE BREVET EUROPÉEN

(45) Date de publication du fascicule du brevet:
**29.04.87**

(51) Int. Cl.⁴: **C 01 B 33/107**

(21) Numéro de dépôt: **83401454.0**

(22) Date de dépôt: **13.07.83**

(54) **Procédé de préparation d'un mélange à base de trichlorosilane utilisable pour la préparation de silicium de haute pureté.**

(30) Priorité: **26.07.82 FR 8212971**

(43) Date de publication de la demande:
**08.02.84 Bulletin 84/6**

(45) Mention de la délivrance du brevet:
**29.04.87 Bulletin 87/18**

(84) Etats contractants désignés:
**BE DE FR GB IT NL**

(56) Documents cité:
**WO-A-81/03168**
**DE-A-3 024 319**
**FR-A-1 239 350**
**FR-A-1 292 508**
**US-A-4 321 246**

(73) Titulaire: **RHONE- POULENC SPECIALITES CHIMIQUES, "Les Miroirs" 18, Avenue d'Alsace, F-92400 Courbevoie (FR)**

(72) Inventeur: **Lepage, Jean- Luc, 81 Chemin de Chavril, F-69110 Sainte- Foy- lès- Lyon (FR)**
Inventeur: **Simon, Gérard, 3 Clos Avril, F-38150 Roussillon (FR)**

(74) Mandataire: **Fabre, Madeleine- France, RHONE- POULENC INTERSERVICES Service Brevets Chimie 25, quai Paul Doumer, F-92408 Courbevoie Cédex (FR)**

## Description

La présente invention concerne un procédé de préparation d'un mélange à base de trichlorosilane utilisable pour la préparation de silicium de haute pureté.

Il est connu que l'on peut obtenir du silicium de haute pureté par décomposition de chlorosilanes, de préférence de trichlorosilane.

Ce trichlorosilane, lors de sa décomposition, conduit à la formation de quantités importantes de tétrachlorure de silicium, la décomposition du trichlorosilane se faisant selon la réaction $4HSiCl_3 \rightarrow Si + 3 SiCl_4 + 2 H_2$.

Par ailleurs, la synthèse du silane $SiH_4$ par dismutation de trichlorosilane conduit également à la formation de tétrachlorure de silicium qu'il est nécessaire de recycler à l'état de trichlorosilane.

On sait que l'on peut recycler ce tétrachlorure de silicium sous forme de trichlorosilane par réduction thermique de ce tétrachlorure de silicium par de l'hydrogène selon la réaction:

$$SiCl_4 + H_2 \rightleftarrows SiHCl_3 + HCl$$

Cette réaction étant équilibrée, la production du trichlorosilane est facilitée par une élévation de la température suivie d'une trempe (refroidissement brusque) du milieu réactionnel pour limiter la réaction inverse. C'est pourquoi on a déjà proposé, par exemple dans le brevet anglais 924 545, d'effectuer la réduction thermique du tétrachlorure de silicium par l'hydrogène en opérant dans un plasma et en projetant le mélange réactionnel contre une surface métallique convenablement refroidie pour réaliser la trempe de ce mélange réactionnel.

Dans le cadre de la présente invention, il a été trouvé que cette réduction thermique du tétrachlorure de silicium réalisée dans un plasma pouvait avantageusement être trempée par injection d'un gaz froid au sein du mélange réactionnel.

De plus, le mélange obtenu en mettant en oeuvre ce perfectionnement contient, comme indiqué dans la réaction ci-dessus, de l'acide chlorhydrique. Il a été trouvé, et c'est là un autre aspect de la présente invention, que, malgré la faible concentration en acide chlorhydrique, ce mélange réactionnel pouvait être avantageusement utilisé en réaction avec des particules de silicium de façon à former une nouvelle quantité de trichlorosilane. La réaction mise en oeuvre est la suivante:

$$3 HCl + Si \rightarrow SiHCl_3 + H_2$$

Cette réaction doit être effectuée à une température comprise entre 250 et 350°C et en présence d'un catalyseur constitué par du cuivre ou par un alliage à base de cuivre. Il a été trouvé que, en utilisant cette réaction, il était possible, non seulement de produire une nouvelle quantité de trichlorosilane, de produire également de l'hydrogène qui sera recyclé, mais encore de faire réagir la totalité de l'acide chlorhydrique contenu dans le gaz de réaction, de sorte que la purification du gaz obtenu, en vue de la décomposition du trichlorosilane qu'il contient, ne pose plus aucun problème. Enfin, les calories nécessaires pour amorcer la réaction de l'acide chlorhydrique sur le silicium proviendront avantageusement de la réaction antérieure de réduction du tétrachlorure de silicium en milieu plasma.

La présente invention concerne donc un procédé de préparation de trichlorosilane à partir de tétrachlorure de silicium, caractérisé en ce que:

- dans une première étape, on réalise la réduction de tétrachlorure de silicium par de l'hydrogène en vue de la production de trichlorosilane, ladite réaction étant effectuée dans un plasma thermique avec trempe du milieu réactionnel;

- dans une deuxième étape, on fait réagir, à 250-350°C, et en présence de cuivre comme catalyseur, le mélange réactionnel provenant de la première étape avec du silicium métallique de façon à consommer l'acide chlorhydrique contenu dans ledit mélange réactionnel et à produire du trichlorosilane et de l'hydrogène;

- puis on sépare d'une part, les gaz permanents, à savoir les gaz plasmagènes, l'hydrogène et éventuellement le gaz de trempe que l'on recycle et, d'autre part, les dérivés du silicium qui sont éventuellement purifiés avant une éventuelle décomposition dans des conditions connues du trichlorosilane.

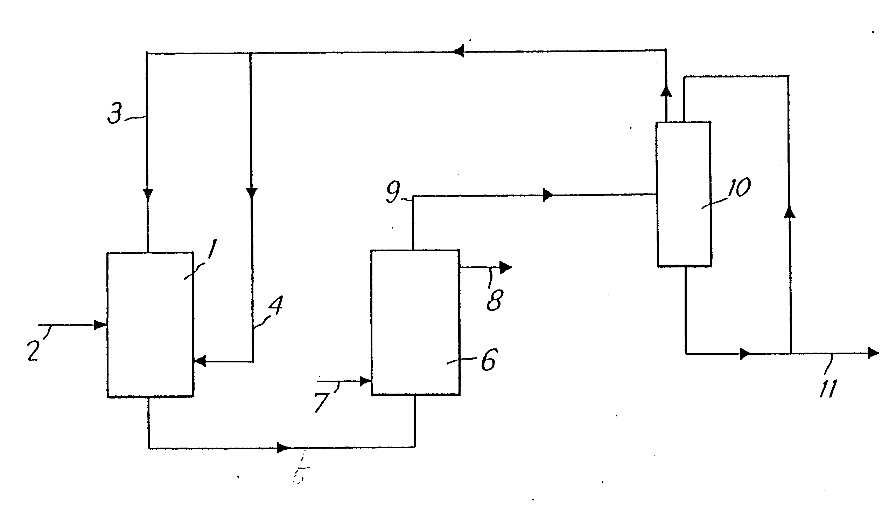

L'invention sera mieux comprise en se référant à la figure unique qui illustre le schéma des divers réacteurs utilisés.

Sur ce schéma, on a représenté:

- en 1, le réacteur à plasma dans lequel s'effectue la réduction du tétrachlorure de silicium avec de l'hydrogène.

Ce réacteur est alimenté:

- en 2, par du tétrachlorure de silicium,

- en 3, par du gaz plasmagène, gaz qui comporte de l'hydrogène, dilué ou non dans un gaz inerte (argon),

- en 4, par un gaz inerte qui est utilisé pour tremper le mélange réactionnel du plasma; dans le cas ci-dessus, ce mélange a la même composition que le gaz plasmagène.

Dans une autre mise en oeuvre, on pourrait utiliser comme moyen de trempe: un gaz différent du gaz plasmagène comme $SiCl_4$ vaporisé ou un tiers gaz inerte dans le milieu.

De ce réacteur, il sort par la canalisation 5 un mélange gazeux contenant, outre le gaz plasmagène et éventuellement le gaz de trempe (ou des produits de décomposition de ce gaz), de l'acide chlorhydrique, du trichlorosilane et du tétrachlorure de silicium qui n'a pas été transformé.

Ce gaz est envoyé dans le réacteur 6 qui reçoit en outre de la poudre de silicium 7; la température dans ce réacteur est comprise entre 250 et 350°C et on y admet également de petites quantités de poudre de cuivre. De ce réacteur, on sort, d'une part, 8 des impuretés et, d'autre part, 9 un mélange gazeux qui contient essentiellement le gaz plasmagène (dont la teneur en hydrogène a été rétablie), une quantité supplémentaire de trichlorosilane, du tétrachlorosilane.

Ce gaz est envoyé dans une colonne 10 où, par lavage, on sépare, d'une part, les gaz permanents (gaz plasmagène) qui peuvent être recyclés, et, d'autre part, les produits siliciés qui sortent en 11. Ces derniers sont éventuellement purifiés s'ils contiennent des traces de HCl puis on opère éventuellement la décomposition du trichlorosilane dans des conditions connues.

Les exemples non limitatifs ci-joints illustrent l'invention; ces exemples se rapportent, d'une part, à la réduction du tétrachlorure de silicium par l'hydrogène et, d'autre part, à la réaction du mélange gazeux obtenu dans cette réduction de la poudre de silicium.

**Exemple 1**

(Réduction du tétrachlorure de silicium dans un plasma d'arc)

Le jet du plasma est produit par un générateur à arc soufflé d'une puissance de 12,5KW. La cathode est constituée d'un barreau de tungstène thorié de 10mm de diamètre et de forme conique. L'anode est en cuivre et a la forme d'une tuyère de 4mm de diamètre et de 38mm de long, évasée du côté cathode.

Le gaz plasmagène est un mélange hydrogène-argon dans le rapport volumique 3/7. Son débit est de 401/min. La tension est de 62,5V et l'intensité a été fixée à 200 A.

Le tétrachlorure de silicium réactionnel, préalablement vaporisé, est injecté directement à la sortie de la tuyère. Son débit est de 4,31/h (sous forme liquide).

Le gaz de trempe est constitué de tétrachlorure de silicium sous forme gazeuse. Sa température est de 120-125°C. Il est injecté à 40mm du point d'injection du tétrachlorure de silicium réactionnel, son débit est de 8,61/h (sous forme liquide).

Une sonde située dans l'axe du générateur plasma permet d'effectuer des prélèvements d'échantillons pour analyse chromatographique du mélange gazeux obtenu. Le refroidissement est limité à 50°C afin d'éviter la condensation du tétrachlorure de silicium.

La composition de ce mélange en sortie du réacteur est la suivante:

| | | |
|---|---|---|
| $H_2$ | : | 5,2% |
| Ar | : | 33,0% |
| $HSiCL_3$ | : | 8,9% |
| $SiCl_4$ | : | 44,0% |
| HCl | : | 8,9% |

Le taux de transformation du tétrachlorure de silicium réactionnel en trichlorosilane est de 50,4% et la consommation énergétique, calculée en tenant compte des débits et de la puissance de la torche plasma, est de 4,9KWh par kg de trichlorosilane formé.

**Exemple 2**

(Réduction du tétrachlorure de silicium dans un plasma d'arc)

Le gaz plasmagène dont la composition et le débit sont identique à ceux de l'exemple 1 est envoyé dans le même générateur plasma (intensité et tension identiques).

Le tétrachlorure de silicium réactionnel est injecté à un débit de 4,31/h (sous forme liquide).

Le gaz de trempe est constitué de méthane, son débit est de 30 l/mn.

La composition du mélange gazeux sortant du réacteur est la suivante:

| | | |
|---|---|---|
| $H_2$ | : | 4,4% |
| Ar | : | 32,9% |
| $CH_4$ | : | 33,6% |
| $HSiCL_3$ | : | 9,7% |
| $SiCl_4$ | : | 6,3% |
| HCl | : | 11,4% |

Le complément à 100 est constitué de silanes divers.

Compte tenu des débits gazeux, cette composition correspond à un taux de transformation du tétrachlorure de silicium de 64,5%. Le rendement en trichlorosilane par rapport à $SiCl_4$ transformé est de 85,4%.

La consommation énergétique est de 4,5KWh par kg de trichlorosilane formé.

**Exemple 3**

(Réaction du silicium en poudre avec le gaz obtenu dans la réduction du tétrachlorure de silicium)

On a utilisé comme charge solide un mélange de 20g de poudre de silicium (diamètre moyen 100 microns) et 2,26g de cuivre métallique en poudre.

Le mélange est admis dans un réacteur (lit fixe) et chauffé à 300°C; on envoie dans ce mélange un réactif gazeux dont la composition molaire est la suivante:

| | | |
|---|---|---|
| $H_2$ | : | 89,1% |
| HCl | : | 4,6% |
| $SiHCl_3$ | : | 4,6% |
| $SiCl_4$ | : | 1,7% |

Le débit de ce gaz est de 2,251/h.

On constate que 100% de l'acide chlorhdrique utilisé ont été transformés pour donner naissance essentiellement à 88,3% de trichlorosilane et à 11,7% de tétrachlorure de silicium.

### Exemple 4

(Réaction du silicium en poudre avec du gaz obtenu dans la réduction du tétrachlorure de silicium)

On reproduit l'exemple 3 en opérant à 260°C avec un gaz de composition molaire suivante:

| | | |
|---|---|---|
| Argon | : | 87,0% |
| HCl | : | 5,5% |
| $SiHCl_3$ | : | 5,5% |
| $SiCl_4$ | : | 2,0% |

On constate que 100% de l'acide chlorhydrique ainsi introduit ont donné naissance à 95,5% de $SiHCl_3$ et 4,5% de $SiCl_4$.

### Exemple 5

Couplage d'une réaction de réduction du tétrachlorure de silicium dans un plasma d'arc à la réaction de formation de trichlorosilane par action de l'acide chlorhydrique formé lors de la première étape, sur du silicium.

Première étape (réduction du tétrachlorure de silicium dans un plasma d'arc)

Le générateur plasma est identique à celui de l'exemple 1.

Le gaz plasmagène est un mélange hydrogène argon dans le rapport volumique 35/65. Son débit est de 40 l/min. La tension est de 70V et l'intensité de 200 A.

Le tétrachlorure de silicium est injecté, sous forme vaporisée, à un débit de 4,2 l/h (débit liquide), soit 0,607 moles/min.

Le gaz de trempe constitué d'argon est injecté; 45mm du point d'injection du tétrachlorure de silicium, à un débit de 25 l/min.

La composition molaire du mélange gazeux sortant du réacteur est la suivante:

| | | |
|---|---|---|
| $H_2$ | : | 10,1% |
| Ar | : | 66,7% |
| $SiHCl_3$ | : | 16,4% |
| $SiCl_4$ | : | 6,8% |

Cette composition correspond à un taux de transformation de l'acide chlorhydrique égal à 100% avec une sélectivité égale à 97,1% en trichlorosilane et 2,9% en tétrachlorure de silicium.

Dans ces conditions, le taux de transformation global du tétrachlorure de silicium calculé selon la réaction ci-dessous est de 64,5% et le rendement en trichlorosilane de 99,9%.

$$2H_2 + 3\ SiCl_4 + Si \rightarrow 4\ SiHCl_3$$

### Revendications

1) Procédé de préparation de trichlorosilane à partir de tétrachlorure de silicium par réduction du tétrachlorosilane par de l'hydrogène en trichlorsilane, réaction à une température de 250 - 350°C du mélange gazeux obtenu à l'opération de réduction, sur du silicium métallique pour transformer l'acide chlorhydrique formé en trichlorosilane et séparation des chlorosilanes obtenus, ledit procédé étant caractérisé en ce que l'étape de réduction du tétrachlorosilane en trichlorosilane est réalisée dans un plasma thermique avec trempe du milieu réactionnel et en ce que l'étape de transformation de l'acide chlorhydrique en trichlorosilane est réalisée en présence de cuivre comme catalyseur.

2) Procédé selon la revendication 1) caractérisé en ce que le moyen de trempe est choisi parmi le gaz plasmagène, $SiCl_4$ vaporisé ou un tiers gaz inerte dans le milieu.

### Patentansprüche

1. Verfahren zur Herstellung von Trichlorsilan aus Siliciumtetrachlorid durch Reduktion von Tetrachlorsilan mittels Wasserstoff zu Trichlorsilan, Umsetzung des bei der Reduktion erhaltenen Gasgemisches bei einer Temperatur von 250 bis 350°C mit metallischem Silicium zur Umwandlung gebildeter Chlorwasserstoffsäure in Trichlorsilan und Abtrennung der erhaltenen Chlorsilane, dadurch gekennzeichnet, daß der Schritt die Reduktion des Tetrachlorsilans zu Trichlorsilan in einem thermischen Plasma unter Abschreckung des Reaktionsmediums durchgeführt wird und daß der Schritt der Umwandlung der Chlorwasserstoffsäure in Trichlorsilan in Gegenwart von Kupfer als Katalysator durchgeführt wird.

2. Verfahren nach Anspruch 1, dadurch gekennzeichnet, daß das Abschreckmedium unter dem plasmaerzeugenden Gas, verdampftem $SiCl_4$ oder einem dritten in dem Medium inerten Gas ausgewählt wird.

### Claims

1) A process for the preparation of trichlorosilane from silicon tetrachloride by the reduction of tetrachlorosilane with hydrogen into trichlorosilane, reaction at a temperature of 250-350°C of the gaseous mixture obtained during the reduction process, with metallic silicon in order to convert the hydrochloric acid formed into trichlorosilane and separation of the chlorosilanes obtained, the said process being characterized in that the stage of reducing tetrachlorosilane into trichlorosilane is carried out in a thermal plasma with quenching of the reaction medium and in that the stage of converting hydrochloric acid into trichlorosilane is carried out in the presence of copper as catalyst.

2) The process according to claim 1), characterized in that the quenching means is chosen from the plasma-forming gas, vaporized $SiCl_4$ or a third inert gas in the medium.